# EUROPÄISCHE PATENTSCHRIFT

(11) **EP 0 548 009 B1**
(45) Veröffentlichungstag und Bekanntmachung des Hinweises auf die Patenterteilung: **01.03.1995**
(21) Anmeldenummer: 92810948.7
(22) Anmeldetag: 03.12.1992
(51) Int. Cl.: E01C 23/08, B62D 51/04

(54) **Vorschub- und Bremsvorrichtung an einem Flächenreinigungsgerät**
Advancing and arresting device for a surface-cleaning apparatus
Mécanisme d'avance et de freinage pour un appareil de nettoyage de surfaces

(30) Priorität: 16.12.1991 CH 3710/91
(43) Veröffentlichungstag der Anmeldung: 23.06.1993
(73) Patentinhaber: PAMAG AG, CH-8890 Flums (CH)
(72) Erfinder: Dummermuth, Paul, CH-4455 Zunzgen (CH)
(74) Vertreter: Feldmann, Clarence Paul

(56) Entgegenhaltungen:
- EP-A- 0 110 394
- CH-A- 666 173
- GB-A- 2 195 301
- US-A- 2 389 700
- US-A- 2 751 028
- US-A- 4 974 695

## Beschreibung

Die vorliegende Erfindung betrifft eine Vorrichtung zum Verschieben und Bremsen eines Flächenreinigungsgerätes an einem Flächenreinigungsgerät mit einer motorisch angetriebenen, die Fläche bearbeitenden Vorrichtung, das für den manuellen Vorschub mit einer fest am Flächenreinigungsgerät angeordneten Lande ausgerüstet ist und eine im Anschlussbereich der Lande angeordnete Achse mit zwei Laufrädern aufweist, wobei die Vorschub- und Bremsvorrichtung an das Flächenreinigungsgerät gekuppelt ist.

Die Anmelderin stellt Flächenreinigungsgerate her, die eine motorisch getriebene Rotortrommel aufweisen, welche zur Veränderung der Bearbeitungsstärke eine Höhenverstellung aufweisen. Die Rotortrommel ist mit einer Vielzahl von Schlaglamellen bestückt. Flächenreinigungsgeräte der genannten Art werden in verschiedenen Baugrössen hergestellt. Die grossen und schweren Flächenreinigungsgeräte sind meist mit Verbrennungsmotoren bestückt, die nicht nur die Rotortrommel treiben, sondern auch den Vorschub des Gerätes bewirken. Im Gegensatz dazu, sind die leichteren und kleineren Flächenreinigungsgeräte meist mit Elektro- oder Luftmotoren betrieben. Hier ist nur die Rotortrommel durch den Motor angetrieben. Der Vorschub und das Bremsen erfolgt durch eine Bedienungsperson, welche das Gerät über die zu bearbeitende Fläche bewegt. Hierzu ist das Flächenreinigungsgerät mit einer Lande und einer im Anschlussbereich der Lande angeordneten Achse mit zwei Laufrädern versehen, sowie einer vorderen Rolle.

Bei der Flächenbearbeitung wirkt auf das Flächenreinigungsgerät eine Reaktionskraft, so dass das Gerät in Folge der Drehrichtung der Fräse die Neigung hat, davonzulaufen. Die Bedienungsperson muss folglich dieser Reaktionskraft entgegen wirken und das Gerät entweder bremsen oder entgegen der Reaktionskraft schieben. Hierbei sollte die Fortbewegungsgeschwindigkeit des Flächenreinigungsgerätes möglichst konstant sein, damit ein gleichmässiger Reinigungseffekt erzielt wird. Dies braucht Erfahrung und bei grösseren Flächen auch eine entsprechende Ausdauer.

Es besteht somit ein Bedürfnis, die bestehenden Geräte, sowie die neuen kleineren Geräte mit einer ankuppelbaren Vorschub- und Bremsvorrichtung zu versehen. Eine entsprechende ankuppelbare Vorschubvorrichtung für Flächenreinigungsgeräte ist aus der CH-A-666'173 bekannt. Diese bekannte, dem Oberbegriff des Anspruchs 1 entsprechende Vorschub- und Bremsvorrichtung ist an der im Anschlussbereich der Lande angeordneten Achse ankuppelbar und besteht aus einem fahrrad-ähnlichen Rahmen mit zwei Rädern und einem Pedalantrieb. Diese Lösung hat sich für die Reinigung von grossen Flächen, insbesondere im Freien, bewährt. Für die Bearbeitung von kleineren Flächen, insbesondere von Böden in geschlossenen Räumen, ist diese Lösung jedoch zu sperrig und zu wenig manövrierfähig.

Die US-A-2'751'028 beschreibt ein Flächenreinigungsgerät, auf dessen Laufräder Reibräderwirken. Hierbei werden die permanent vorhandenen Reibräder mittels einer Transmission vom Motor angetrieben, der die die Fläche bearbeitende Vorrichtung treibt.

Es ist die Aufgabe der vorliegenden Erfindung, eine Vorschub- und Bremsvorrichtung zu einem Flächenreinigungsgerät zu schaffen, welche Vorschub- und Bremsvorrichtung möglichst einfach montier- und demontierbar ist, sowie möglichst platzsparend am Flächenreinigungsgerät anbaubar ist.

Diese Aufgabe löst eine Vorrichtung der eingangs genannten Art mit den Merkmalen des Patentanspruches 1. Weitere vorteilhafte Ausgestaltungsformen gehen aus den abhängigen Ansprüchen hervor und deren Bedeutung und Wirkung ist anhand der nachfolgenden Beschreibung erläutert.

In der Zeichnung ist ein bevorzugtes Ausführungsbeispiel des Erfindungsgegenstandes dargestellt und anhand der nachfolgenden Beschreibung erklärt. Es zeigt:
- Figur 1: ein Flächenreinigungsgerät mit angekoppelter Vorschub- und Bremsvorrichtung in der Gesamtansicht von der Seite;
- Figur 2: die am Flächenreinigungsgerät angekoppelte Vorschub- und Bremsvorrichtung in einem Vertikalschnitt und
- Figur 3: in einem Horizontalschnitt unter Weglassung der Antriebsmittel.

In der nachfolgenden Beschreibung wird statt Vorschub- und Bremsvorrichtung nur vereinfachend Vorschubvorrichtung verwendet.

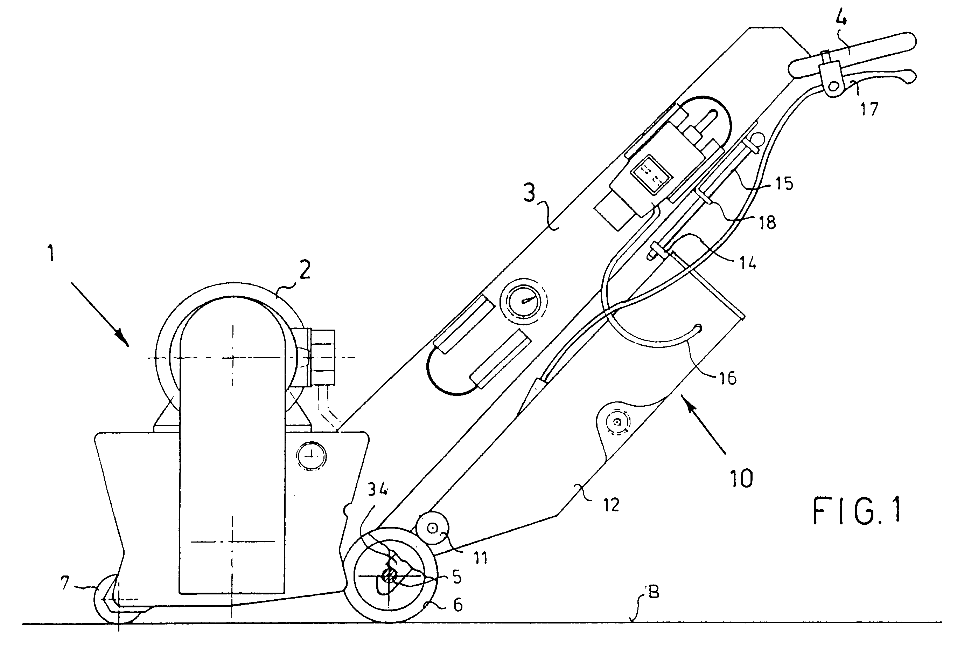

In der Figur 1 ist ein von der Anmelderin auf dem Markt vertriebenes Flächenreinigungsgerät 1 in der Seitenansicht dargestellt. Auf dem Gehäuse des Flächenreinigungsgerätes 1 ist ein Antriebmotor 2 ersichtlich, welcher über eine Transmission eine im Gehäuse untergebrachte, die Fläche bearbeitende Vorrichtung bildende, Rotortrommel treibt. Mittels der Lande 3, die einen Handgriff 4 am oberen Ende aufweist, wird das Flächenreinigungsgerät 1 über den zu reinigenden Boden B bewegt. Im Anschlussbereich der Lande 3 an das Flächenreinigungsgerät 1 ist eine Achse 5 angeordnet. Auf dieser lagern die beiden Laufräder 6 beidseitig der Lande 3. Auf der Vorderseite ist das Flächenreinigungsgerät mittels mindestens einer Rolle 7 abgestützt.

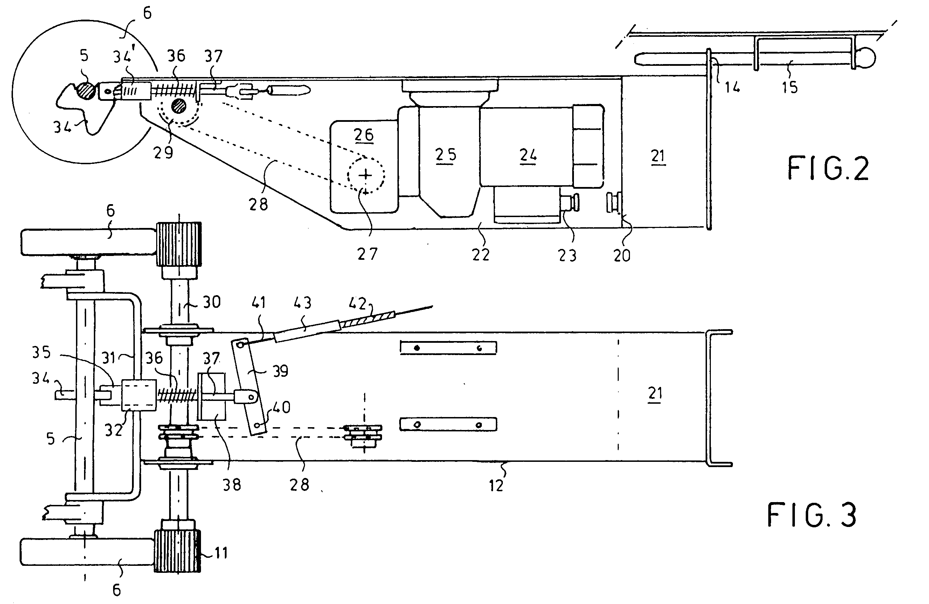

Die erfindungsgemässe Vorschubvorrichtung 10 ist unten an der schräg nach oben verlaufenden Lande 3, sowie an der Achse 5 des Flächenreinigungsgerätes 1 lösbar angekoppelt. Auf die Ankoppelung der Vorschubvorrichtung 10 an der Achse 5 wird unter Hinweis auf die Figuren 2 und 3 später noch eingegangen. Zur Befestigung der Vorschubvorrichtung 10 an der Lande 3 ist an der Vorrichtung 10 eine Oese 14 angebracht, in der ein verschiebbarer Bolzen 15 eingreift. Der verschiebbare Bolzen 15 lagert in einer Halterung 18, die im oberen Bereich, nahe dem Handgriff 4, an der Lande 3 angeordnet ist. Die Vorschubvorrichtung 10 hat ein umschliessendes Schutzgehäuse 12, in dem der Antrieb untergebracht ist, welcher auf mindestens ein Reibrad 11 wirkt. Ist die Vorschubvorrichtung 10 am Flächenreinigungsgerät 1 angekoppelt, so drückt das Reibrad 11 auf eines der beiden seitlichen Laufräder 6.

Der im Gehäuse 12 der Vorschubvorrichtung 10 untergebrachte Antriebsmotor kann entweder unabhängig von einem in der Vorschubvorrichtung untergebrachten Akkumulator betrieben werden oder energetisch mit der Speisung des Antriebmotores 2 des Flächenreinigungsgerätes 1 gekoppelt sein. Im dargestellten Beispiel trifft letztere Variante zu. Daher erkennt man ein Verbindungskabel zwischen der Vorschubvorrichtung 10 und der Lande 3, welche die elektrische Koppelung 16 herstellt. Die gemeinsame Speisung für den Antriebmotor 2 zur Betätigung der Rotortrommel im Flächenreinigungsgerät 1 und für den Antriebmotor der Vorschubvorrichtung 10 ist in der Zeichnung nicht dargestellt. Die Speisung des Motores in der Vorschubvorrichtung 10 mittels einem Akkumulator ist sicherlich dann zu wählen, wenn der Antriebsmotor 2 für die Rotortrommel ein Verbrennungsmotor ist. Die Rotortrommel des Flächenreinigungsgerätes 1 könnte aber auch mittels einem Luftmotor als Antrieb 2 betrieben werden. In diesem Fall wäre das Gerät an einem Druckluftschlauch angeschlossen und eine energetische Koppelung mit dem Antriebsmotor in der Vorschubvorrichtung 10 wäre wiederum möglich.
Am Griff 4 der Lande 3 erkennt man einen Betätigungshebel 17, mittels dem die Relativdistanz der Vorschubvorrichtung 10 zur Achse 5 des Reinigungsgerätes 1, beziehungsweise die Andruckkraft des Reibrades 11 auf eines der Laufräder 6 des Reinigungsgerätes 1 veränderbar ist. Auf die entsprechende Wirkungsweise wird später noch eingegangen.

In der Figur 3 ist ein schematisch vertikaler Längsschnitt durch die Vorschubvorrichtung 10 vereinfacht dargestellt. Dies entspricht etwa einer Seitenansicht der Vorschubvorrichtung unter Weglassung der nähergelegenen Seitenwand des umhüllenden Gehäuses 12. Eine vertikale Trennwand 20 das Gehäuse in eine Akkulumatorenkammer 21 und einer Antriebskammer 22 unterteilen. Arbeitet man ohne Akku kann auf die Trennwand 20 verzichtet werden. Mittels elektrischen Klemmen 23 und einer nicht dargestellten Verbindung lässt sich ein, hier ebenfalls nicht dargestellter, Akku mit einem Antriebsaggregat verbinden. Das Antriebsaggregat umfasst einen Elektromotor 24, der über einen Wandler 25 und einem Uebersetzungsgetriebe 26 ein Abtriebsrad 27 antreibt. Das Abtriebsrad steht über einer Transmission 28 mit einem Antriebsrad 29 in Verbindung. Das Antriebsrad 29 sitzt fest auf einer Welle 30, auf der beidseitig je ein gesichertes Reibrad 11 montiert ist. Die Reibräder 11 wirken, wie vorher beschrieben, auf die Laufräder 6 des Flächenreinigungsgerätes 1.

Während die mechanische Kuppelung 13 des Vorschubgerätes 10 mit der Lande 3 sehr einfach zugänglich ist und entsprechend auch einfach realisierbar, ist die Verbindung des Vorschubgerätes 10 mit der Achse 5 des Flächenreinigungsgerätes 1 relativ komplex. Mittels einer zweizinkigen Gabel 31 stützt sich die gesamte Vorschubvorichutng 10 auf der Achse 5 ab. Beim Aufstecken der zweizinkigen Gabel 31 auf die Achse 5 wird eine mittig zwischen den beiden Zinken der Gabel 31 angeordneter schwenkbarer Zughaken 34 weggeschwenkt. Sobald die zweizinkige Gabel 31 genügend weit auf die Achse 5 hinuntergedrückt ist, schwenkt der Haken 34 zurück und umgreift die Achse 5. Der Zughaken 34 ist an einem Zugstab 35 schwenkbar angeordnet, der in einer Lagerhülse 32 durch die Gabel 31 hindurchgeführt ist. Ein seitlich im Zugstab 35 gelagerter Druckstift 34' ist federbelastet und drückt auf den schwenkbaren Zughaken 34, so dass dieser die Achse 5 umgreift, sobald die zweizinkige Gabel 31 in die Einrastposition hinuntergepresst ist.Am Zughaken 34 gegenüberliegende Ende des Zugstabes 35 ist dieser durch eine kurze Zugstange 37 verlängert. Diese Zugstange durchsetzt einen am Gehäuse befestigten Lagerblock 38 und ist an ihrem Ende mit einem einarmigen Schwenkhebel 39 verbunden. Dieser einarmige Schwenkhebel 39 hat seinen fixen Lagerpunkt 40 wiederum am Gehäuse 12. An seinem äusseren schwenkbaren Ende greift ein Drahtseil 41 eines Bowdenkabels 42 an. Durch eine Hülse 43 ist das Drahtseil aus dem Gehäuse geführt und in derselben Hülse stützt sich nach bekannter Art der Mantel des Bowdenkabels direkt oder indirekt ab. Im zweiteren Fall erfolgt dies unter Zwischenfügung einer bekannten Stellschraube, mittels der der Bowdenzug nachstellbar ist. Das Bowdenkabel 42 selber führt zu einem Betätigungshebel 17, der einem üblichen Fahrradbremsheber entspricht und an Griff 4 der Lande 3 angeordnet ist. Der Betätigungshebel 17 kann mit einem Schnallenverschluss am Griff 4 befestigt sein, damit bei der schnellen Montage oder Entfernung des Vorschubgerätes auch dieser Teil schnell gelöst oder befestigt werden kann. Zur Montage der Vorschubvorrichtung 10 genügt es nun die zweizinkige Gabel 31 auf die Achse 5 zu schieben bis der Zughaken 34 einhängt. Die beiden Zinken der Gabel 31 haben dazu je ein entsprechendes Aufnahmemaul. Hiernach muss nur noch die Vorschubvorrichtung mittels des verschiebbaren Bolzens 15, der in die Oese 14 eingeführt wird, an der Lande 3 gesichert werden. Ueber den Betätigungshebel 17 lässt sich via den Bowdenzug 42 eine Zugkraft auf den Zughaken 34 ausüben, wodurch die gesamte Vorschubvorrichtung sich relativ zur Lande zur Achse 5 hin verschiebt und die Reibräder 11 auf die Laufräder 6 drückt. Sobald jedoch der Betätigungshebel 17 losgelassen wird, stösst sich der Zughaken 34 an der Achse 5 ab. Dies bewirkt eine Druckfeder 36, die die Zugstange 37 umgibt und zwischen dem Lagerblock und dem Zugstab angeordnet ist.

Die beschriebene Vorschubvorrichtung 10 hat folglich den Vorteil, dass sie einfach und schnell an die bereits auf dem Markt erhältlichen Flächenreinigungsgeräte ankuppelbar ist, ohne dabei die Manövrierfähigkeit des Flächenreinigungsgerätes zu beeinträchtigen. Zu dem wird das Gesamtgewicht des Flächenreinigungsgerätes mit der Vorschubvorrichtung nur unwesentlich erhöht, so dass auch dessen Transportfähigkeit nicht beeinträchtigt wird. Mittels einem in der Zeichnung nicht dargestellten Schalter lässt sich die Drehrichtung des Antriebmotores der Vorschubvorrichtung ändern, beziehungsweise stoppen, unabhängig von der Wirkung des Antriebmotores auf dem Flächenreinigungsgerät.

## Patentansprüche

1. Vorrichtung (10) zum Verschieben und Bremsen eines Flächenreinigungsgerätes an einem Flächenreinigungsgerät (1) mit einer motorisch angetriebenen, die Fläche bearbeitenden Vorrichtung, das für den manuellen Vorschub mit einer fest am Flächenreinigungsgerät (1) angeordneten Lande (3) ausgerüstet ist und eine im Anschlussbereich der Lande (3) angeordnete Achse (5) mit zwei Laufrädern (6) aufweist, wobei die Vorschub- und Bremsvorrichtung (10) an das Flächenreinigungsgerat (1) gekuppelt ist, dadurch gekennzeichnet, dass die Vorschub- und Bremsvorrichtung (10) einerseits an der Lande (3) und andererseits mit einer an sie angeordneten, zweizinkigen Gabel (31) an der Achse (5), die sie teilweise umgreift, lösbar befestigt ist, und dass die Vorschub- und Bremsvorrichtung mindestens ein getriebenes Reibrad (11) aufweist, welches auf mindestens einer der beiden Laufräder (6) des Flächenreinigungsgerätes (1) wirkt.

2. Vorrichtung nach Anspruch 1, dadurch gekennzeichnet, dass das Reibrad (11) von einem in der Vorschub- und Bremsvorrichtung (10) untergebrachten Elektromotor (24) getrieben ist.

3. Vorrichtung nach Anspruch 2, dadurch gekennzeichnet, dass der Elektromotor (24) von einem in der Vorschub- und Bremsvorrichtung untergebrachten Akkumulator gespiesen ist.

4. Vorrichtung nach Anspruch 2, dadurch gekennzeichnet, dass die die Fläche bearbeitende Vorrichtung des Flächenreinigungsgerätes (1) elektromotorisch (2) getrieben ist und der Elektromotor (24) der Vorschub- und Bremsvorrichtung (10) mit der Speisung des Flächenreingigungsgerätes elektrisch gekoppelt ist.

5. Vorrichtung nach Anspruch 1, dadurch gekennzeichnet, dass die die Fläche bearbeitende Vorrichtung des Flächenreinigungsgerätes (1) pneumatisch getrieben ist und die Vorschub- und Bremsvorrichtung (10) einen Luftmotor aufweist, der das Reibrad (11) treibt, wobei der Luftmotor der Vorschub- und Bremsvorrichtung mit der Speisung des pneumatischen Antriebes des Flächenreinigungsgerätes (1) gekoppelt ist.

6. Vorrichtung nach Anspruch 1, dadurch gekennzeichnet, dass das obere Ende der Vorschub und Bremsvorrichtung (10) eine Oese (14) aufweist, in der ein verschiebbarer, an der Lande (3) des Flächenreinigungsgerätes angeordneter Bolzen (15), zur Befestigung der Vorschub- und Bremsvorrichtung an der Lande eingreift.

7. Vorrichtung nach Anspruch 1, dadurch gekennzeichnet, dass die zweizinkige Gabel von einer Hülse (32) durchsetzt ist, in der ein Zugstab (35) gleitend gelagert ist, welcher an seinem vorderen Ende einen schwenkbaren Zughaken (34) aufweist, der die Achse (5) des Flächenreinigungsgerätes im montierten Zustand der Vorschub- und Bremsvorrichtung (10) erfasst.

8. Vorrichtung nach Anspruch 7, dadurch gekennzeichnet, dass eine den Zugstab (35) verlängernde Zugstange (37) vorgesehen ist, die einen am Gehäuse (12) befestigten Lagerbock (38) durchsetzt und an einem einarmigen, ebenfalls am Gehäuse befestigten schwenkbaren Hebel (39) montiert ist, der über ein Zugorgan (42) mit einem Betätigungshebel (17) am Griff (4) der Lande (3) in Wirkverbindung steht, womit sich eine Zugkraft auf den Zughaken (34) ausüben lässt und somit die Vorschub- und Bremsvorrichtung relativ zur Achse (5) verschiebbar ist.

9. Vorrichtung nach Anspruch 8, dadurch gekennzeichnet, dass zwischen dem Zughaken (34) und dem Gehäuse (12) der Vorschub- und Bremsvorrichtung (10) mittelbar oder direkt eine Druckfeder (36) angeordnet ist, mittels der die Relativdistanz zwischen Vorschub- und Bremsvorrichtung und der Achse des Flächenreinigungsgerätes vergrösserbar ist.

10. Vorrichtung nach den Ansprüchen 8 und 9, dadurch gekennzeichnet, dass die Druckfeder (36) zwischen dem Lagerbock (38) und dem Zugstab (35) angeordnet ist.

11. Vorrichtung nach Anspruch 1, dadurch gekennzeichnet, dass das Reibrad (11) auf einer in der Vorschub- und Bremsvorrichtung gelagerten Welle (30) befestigt ist, die über einer Transmission (28) getrieben ist.

## Claims

1. Device (10) for moving and braking a surface cleaning implement (1) with a motor-driven, surface-working means, which is equipped for manual advance with a member (3) fixed to the surface cleaning implement (1) and has a shaft (5) with two wheels (6) located in the connecting area of the member (3), the advance and braking device (10) being coupled to the surface cleaning implement (1), characterized in that the advance and braking device (10) is detachably fixed on the one hand to the member (3) and on the other to a two-pronged fork (31) positioned thereon and located on the shaft (5) and which it partly surrounds, and that the advance and braking device has at least one driven friction wheel (11), which acts on at least one of the two wheels (6) of the surface cleaning implement (1).

2. Device according to claim 1, characterized in that the friction wheel (11) is driven by an electric motor (24) housed in the advance and braking device (10).

3. Device according to claim 1, characterized in that the electric motor (24) is supplied by an accumulator or battery housed in the advance and braking device.

4. Device according to claim 2, characterized in that the surface-working means of the surface cleaning device (1) is driven electromotively (2) and the electric motor (24) of the advance and braking device (10) is electrically coupled to the supply of the surface cleaning implement.

5. Device according to claim 1, characterized in that the surface-working means of the surface cleaning implement (1) is driven pneumatically and the advance and braking device (10) has an air motor, which drives the friction wheel (11), the air motor of the advance and braking device being coupled to the supply of the pneumatic drive of the surface cleaning implement (1).

6. Device according to claim 1, characterized in that the upper end of the advance and braking device (10) has a ring (14) in which engages a displaceable bolt (15) positioned on the member (3) of the surface cleaning implement for fixing the advance and braking device to said member.

7. Device according to claim 1, characterized in that the two-pronged fork is traversed by a sleeve (32) in which is slidingly mounted a tension member (35), which as at its front end a pivotable draw hook (34), which grips the shaft (5) of the surface cleaning implement in the fitted state of the advance and braking device (10).

8. Device according to claim 7, characterized in that a tie rod (37) extending the tension member (35) is provided and traverses a bearing block (38) fixed to the casing (12) and is mounted on a one-armed pivotable lever (39), which is also fixed to the casing and which is in operative connection by means of a tension member (42) to an actuating lever (17) on the handle (4) of the member (3), so that a tension can be exerted on the draw hook (34) and consequently the advance and braking device is movable relative to the shaft (5).

9. Device according to claim 8, characterized in that between the draw hook (34) and the casing (12) of the advance and braking device (10) is directly positioned a compression spring (36) by means of which it is possible to increase the relative distance between the advance and braking device and the surface cleaning implement shaft.

10. Device according to claims 8 and 9, characterized in that the compression spring (36) is positioned between the bearing block (38) and the tension member (35).

11. Device according to claim 1, characterized in that the friction wheel (11) is fixed to a shaft (30) mounted in the advance and braking device and which is driven by means of a transmission (28).

## Revendications

1. Mécanisme (10) d'avance et de freinage pour un appareil de nettoyage de surfaces (1) muni d'un dispositif de nettoyage entraîné par un moteur et qui comporte une fixation (3) reliée de manière solidaire à l'appareil de nettoyage de surfaces (1) pour l'avance manuelle de ce dernier et présente un axe (5) disposé dans la zone de raccordement de la fixation (3) comprenant deux roues mobiles (6), le mécanisme d'avance et de freinage (10) étant accouplé à l'appareil de nettoyage de surfaces (1), **caractérisé en ce que** le mécanisme d'avance et de freinage (10) est fixé de manière amovible, d'une part à la fixation (3) et d'autre part d l'axe (5) à l'aide d'une fourche à deux dents (31) disposée sur lui de manière à l'envelopper partiellement, et en ce que le mécanisme d'avance et de freinage présente au moins un galet de friction (11) agissant sur au moins l'une des deux roues mobiles (6) de l'appareil de nettoyage de surfaces (1).

2. Mécanisme selon la revendication 1, caractérisé en ce que le galet de friction (11) est entraîné par un moteur électrique (24) monté sur le mécanisme d'avance et de freinage (10).

3. Mécanisme selon la revendication 2, caractérisé en ce que le moteur électrique (24) est alimenté par un accumulateur monté sur le mécanisme d'avance et de freinage.

4. Mécanisme selon la revendication 2, caractérisé en ce que le dispositif pour le traitement des surfaces de l'appareil de nettoyage de surfaces (1) est entraîné par un système électrique (2) et que le moteur électrique (24) du mécanisme d'avance et de freinage (10) est accouplé à l'alimentation électrique de l'appareil de nettoyage de surfaces.

5. Mécanisme selon la revendication 1, caractérisé en ce que le dispositif pour le traitement des surfaces de l'appareil de nettoyage de surfaces (1) est entraîné par un système pneumatique et que le mécanisme d'avance et de freinage (10) présente un moteur pneumatique entraînant le gaiet de friction (11), le moteur pneumatique étant accouplé au mécanisme d'avance et de freinage par l'alimentation du moteur pneumatique de l'appareil de nettoyage de surfaces (1).

6. Mécanisme selon la revendication 1, caractérisé en ce que l'extrémité supérieure du mécanisme d'avance et de freinage (10) présente un oeillet (14) dans lequel un boulon (15) mobile disposé sur la fixation (3) de l'appareil de nettoyage de surfaces est accouplé à la fixation pour fixer le mécanisme d'avance et de freinage sur ladite fixation.

7. Mécanisme selon la revendication 1, caractérisé en ce que la fourche à deux dents est traversée par une douille (32) dans laquelle est logée une barre de traction coulissante (35) présentant, à son extrémité avant, un crochet pivotant (34) s'accrochant dans l'axe (5) de l'appareil de nettoyage de surfaces lorsque le mécanisme d'avance et de freinage (10) est monté sur l'appareil.

8. Mécanisme selon la revendication 7, caractérise en ce qu'un tirant (37) est prévu dans le prolongement de la barre de traction (35), ledit tirant traversant un support (38) fixé sur le carter (12) et étant monté sur un levier pivotant à un seul bras (39) également monté sur le carter, ledit levier étant associé, par un organe de traction (42), à un levier de commande (17) monté sur la poignée (4) de la fixation (3) de manière à pouvoir exercer une force de traction sur le crochet (34) afin de déplacer le mécanisme d'avance et de freinage dans un mouvement relatif par rapport à l'axe (5).

9. Mécanisme selon la revendication 8, caractérisé en ce qu'un ressort de compression (36) est directement ou indirectement placé entre le crochet (34) et le carter (12) du mécanisme d'avance et de freinage, ce ressort permettant d'augmenter la distance relative entre le mécanisme d'avance et de freinage et l'axe de l'appareil de nettoyage de surfaces.

10. Mécanisme selon les revendications 8 ou 9, caractérisé en ce que le ressort de compression (36) est disposé entre le support (38) et la barre de traction (35).

11. Mécanisme selon la revendication 1, caractérisé en se que le galet de friction (11) est fixé sur un arbre (30) logé dans le mécanisme d'avance et de freinage, ledit arbre étant entraîné par une transmission (28).
